**Europäisches Patentamt**

**European Patent Office**

**Office européen des brevets**

(11) Veröffentlichungsnummer: **0 215 295**
**B1**

(12) **EUROPÄISCHE PATENTSCHRIFT**

(45) Veröffentlichungstag der Patentschrift:
**31.01.90**

(21) Anmeldenummer: **86111169.8**

(22) Anmeldetag: **12.08.86**

(51) Int. Cl.⁴: **A 61 C 1/08**

(54) **Rastvorrichtung zum lösbaren Verbinden eines Kopfteils mit dem Griffteil eines zahnärztlichen Handstückes.**

(30) Priorität: **26.08.85 DE 3530424**

(43) Veröffentlichungstag der Anmeldung:
**25.03.87 Patentblatt 87/13**

(45) Bekanntmachung des Hinweises auf die Patenterteilung:
**31.01.90 Patentblatt 90/5**

(84) Benannte Vertragsstaaten:
**AT CH DE FR GB IT LI SE**

(56) Entgegenhaltungen:
**EP-A- 0 029 862**
**DE-A- 2 756 011**

(73) Patentinhaber: **Siemens Aktiengesellschaft,**
**Wittelsbacherplatz 2, D-8000 München 2 (DE)**

(72) Erfinder: **Schuss, Werner, Dipl.-Ing. (FH), von**
**Erthalstrasse 44, D-6148 Heppenheim (DE)**
Erfinder: **Bierbaum, Thomas, Dipl.-Ing. (FH),**
**Leimenkautweg 10, D-6520 Worms 1 (DE)**
Erfinder: **Muther, Thomas, Buchenweg 3,**
**CH-2552 Orpund (CH)**

ACTORUM AG

## Beschreibung

Die Erfindung bezieht sich auf eine Rastvorrichtung zum lösbaren Verbinden eines ein Kopfgehäuse mit Halsteil enthaltenden Kopfteils mit dem Griffteil eines zahnärztlichen Handstückes, enthaltend einen Schaft mit einem Verdrehsicherungselement im einen und einer Führungshülse für den Schaft mit Gegenglied für das Verdrehsicherungselement im anderen der miteinander zu verbindenden Handstückteile, enthaltend ferner wenigstens ein Rastglied mit radial wirkenden Eingriffsmitteln im einen und wenigstens einer Anschlagfläche aufweisenden Gegeneingriffsmitteln im anderen der miteinander zu verbindenden Teile und ein Betätigungsglied für die Eingriffsmittel, welches bei Ausübung eines Druckes die Rastverbindung außer Eingriff bringt.

Bei einer bekannten solchen Rastvorrichtung (EP-A-0 029 862) enthält das Halsteil des Handstückes eine federelastische Ringhülse, die in diesem Bereich die Oberfläche des Handstückes bildet und mit der Oberfläche der benachbarten Handstückteile bündig abschließt. Im seitlichen Flächenbereich, der das Kopfgehäuse tangiert, befinden sich an der Ringhülse achsparallel sich erstreckende Stege, an deren freien Enden radial nach außen gerichtete Rastnasen angeordnet sind, die in entsprechenden Ausnehmungen in der Griffhülse eingreifen. Die Rastverbindung kann gelöst werden, indem das Kopfteil mit Daumen und Zeigefinger im Bereich der Seitenflanken des Halsteils, also in dem Bereich, der praktisch das Kopfgehäuse tangiert, an dieser Stelle ergriffen und gegen die Ringhülse gedrückt wird. Durch eine so herbeigeführte Verformung der Ringhülse kommen die Rastnasen mit den Ausnehmungen außer Eingriff.

Die Anordnung der federelastischen Ringhülse sowie die mit ihr verbundenen achsparallelen Stege mit den Rastnasen nehmen am Kopfteil flächenmäßig relativ viel Platz in Anspruch. Hinzu kommt, daß die als Betätigungsglied wirkende Hülse eine relativ große Sichtfläche bildet, die der übrigen Handstückoberfläche entsprechend ausgeführt sein muß und damit relativ kostenaufwendig ist.

Der im Anspruch 1 angegebenen Erfindung liegt die Aufgabe zugrunde, demgegenüber eine verbesserte, insbesondere auch kostengünstiger zu gestaltende Rastvorrichtung zu schaffen.

Dadurch, daß das bisher kostenintensivste und flächenmäßig größte Teil der Rastvorrichtung, das Betätigungsglied, nunmehr dem Griffteil des Handstückes zugeordnet ist, also jenem Handstückteil, welches in der Instrumentenbestückung beim Zahnarzt weniger häufig vorhanden ist, läßt sich bereits eine erste Kostenreduzierung erzielen. Durch die Verlagerung des Betätigungsgliedes vom Kopfteil auf das Griffteil ergibt sich außerdem ein erheblicher Platzgewinn am Kopfteil selbst, ein Vorteil, der zur Heranführung von Spray und Licht an die Präparationsstelle genutzt werden kann. Dadurch, daß die Trennstelle von Kopfteil und Griffteil im Vergleich zur vorgenannten Konstruktion nunmehr sehr viel näher zum Kopfgehäuse hin verlegt ist, lassen sich weitere bedienungstechnische Vorteile erzielen. Der Zugriff zum Betätigungsglied kann, obgleich dieses nun nicht mehr dem Kopfteil zugeordnet ist, in gleicher Weise wie bei der bekannten Vorrichtung erfolgen, nämlich mit Daumen und Zeigefinger der das Kopfteil ergreifenden Hand, wobei die Bedienung sogar noch günstiger ist, weil bereits beim Erfassen des Kopfgehäuses mit Daumen und Zeigefinger das Betätigungsglied direkt im unmittelbaren Zugriffsbereich der Fingerkuppen von Daumen und Zeigefinger liegt. Die Rastvorrichtung kann so sehr viel leichter betätigt werden. Weiterhin ist es bei dieser Anordnung günstig, daß die Schnittkante von Kopfgehäuse und Halsteil den Fingern eine gewisse Abstützmöglichkeit beim axialen Abziehen der Handstückteile bietet.

Eine weitere Kostenreduzierung läßt sich erzielen, wenn auch das Rastglied mit den radial wirkenden Eingriffsmitteln dem Griffteil zugeordnet wird. Eine solche Anordnung ist jedoch nicht in jedem Falle vorrangig anzustreben, denn wegen der pro Kopfteil geringeren Rastvorgänge und der damit verbundenen geringeren Belastung kann es unter Umständen vorteilhaft sein, das Rastglied mit den Eingriffsmitteln am Kopfteil zu belassen.

Das Rastglied mit den Eingriffsmitteln kann unterschiedlich gestaltet sein.

Eine besonders vorteilhafte Konstruktion läßt sich erzielen, wenn Rastglied und Eingriffsmittel aus ein oder mehreren dünnen, im wesentlichen achsparallel zum Handstück sich erstreckenden Lappen gebildet werden, die mit ihren stirnseitigen Enden an einem entsprechend ausgebildeten, die Gegeneingriffsmittel bildenden Anschlag des anderen Handstückteils rastend anliegen und durch eine bei Zusammendrücken des Betätigungsgliedes nach innen oder außen erfolgende radiale Verstellung im Sinne einer Entrastung außer Eingriff gebracht werden können.

Eine solche stirnseitige Anschlagrastung benötigt im Vergleich zu radial vorstehenden Rastnasen geringere Einbaumaße, weil praktisch die Wandstärke der Lappen zum Anschlag und damit zur Rastung voll genutzt werden kann.

Die Lappen können entweder eigenfedernd ausgebildet sein oder durch Fremdfederwirkung radial verstellbar angeordnet sein. Sie können ferner ein mehrteiliges oder auch ein einteiliges Rastglied bilden. Bei letzterer Variante können die Lappen mittels eines Bügels oder mittels einer Hülse zusammengehalten sein.

Weitere vorteilhafte Ausgestaltungen und Weiterbildungen der Erfindung sind aus den Unteransprüchen und der nachfolgenden Beschreibung mehrerer Ausführungsbeispiele zu entnehmen.

Es zeigen:

Fig. 1 ein zahnärztliches Handstück komplett mit Schlauchanschluß,

Fig. 2 eine erste Ausführungsform eines Kopfteils,

Fig. 3 den vorderen Griffteil des Handstückes,

Fig. 4 eine erste Ausführungsform einer im Griffteil befestigbaren Führungshülse,

Fig. 5 eine erste Ausführungsform eines Rastgliedes für das Kopfteil,

Fig. 6 eine erste Ausführungsform eines Betätigungsgliedes für das Rastglied gemäß Fig. 5,

Fig. 7 eine zweite Ausführungsform einer Führungshülse,

Fig. 8 eine zweite Ausführungsform eines Kopfteiles,

Fig. 9 eine zweite Ausführungsform eines Rastgliedes für das Kopfteil,

Fig. 10 eine dritte Ausführungsform eines Rastgliedes für das Kopfteil,

Fig. 11 eine dritte Ausführungsform einer Führungshülse,

Fig. 12/13 eine vierte Ausführungsform eines Rastgliedes,

Fig. 14 ein Halteteil für die in Figuren 12/13 gezeigten Teile,

Fig. 15 eine weitere Ausführungsform eines Kopfteiles mit Rastglied in schaubildlicher Darstellung,

Fig. 16 das in Fig. 15 gezeigte Rastglied in Frontansicht entsprechend der Linie 16/16 in Fig. 15,

Fig. 17 eine weitere, zum Kopfteil nach Fig. 15 passende Führungshülse,

Fig. 18 die in Fig. 17 gezeigte Führungshülse mit Betätigungsglied,

Fig. 19 einen Teil einer weiteren Ausführungsform eines Rastgliedes im Längsschnitt.

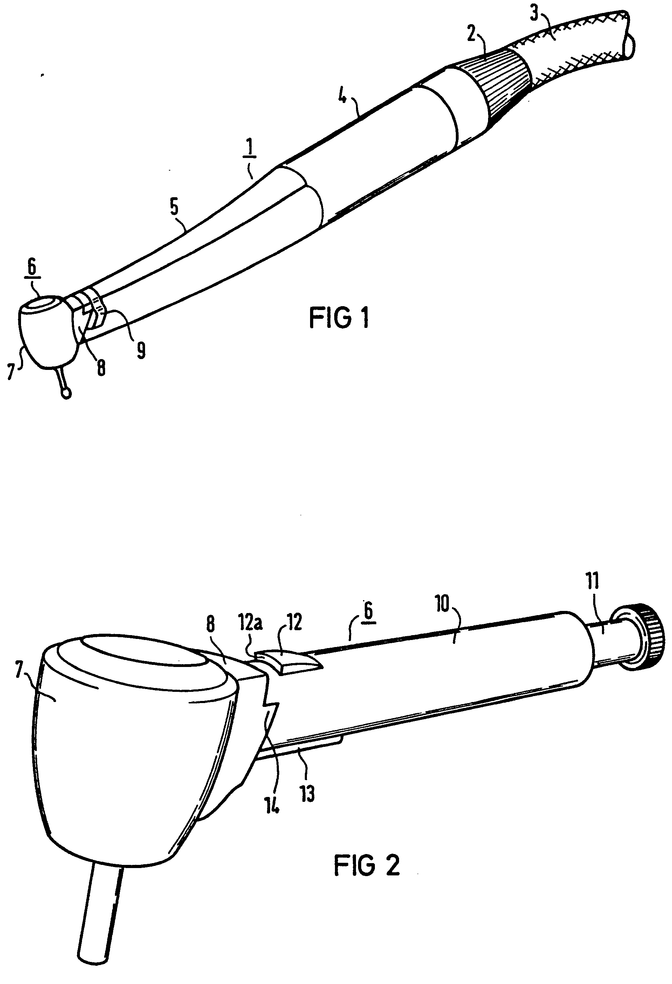

Die Figur 1 zeigt in einer schaubildlichen Darstellung ein allgemein mit 1 bezeichnetes Handstück, welches mittels Anschlußarmatur 2 an einen Versorgungsschlauch 3 angeschlossen ist. Der der Anschlußarmatur 2 zugewandte Handstückabschnitt 4 enthält eine nicht näher dargestellte Antriebseinheit, z.B. einen Elektro- oder Luftmotor. An den Handstückabschnitt 4 schließen sich ein Griffteil 5 sowie ein Kopfteil 6 an. Das Kopfteil 6 enthält in bekannter Weise ein Kopfgehäuse 7 zur Aufnahme eines nicht näher bezeichneten Werkzeuges sowie ein relativ kurzes Halsteil 8. Mit 9 ist ein Betätigungsglied für eine anhand der nachfolgenden Figuren noch näher erläuterte Rasteinrichtung zur axialen Rastung des Kopfteiles 6 gegenüber dem Griffteil 5 bezeichnet.

Die Figur 2 zeigt in schaubildlicher Darstellung das Kopfteil 6 als Einzelteil. Das Kopfteil 6 weist einen im wesentlichen zylindrischen Schaft 10 auf, in dem eine Triebwelle 11 zum Antrieb des Werkzeuges gelagert ist. An der Oberseite des Schaftes 10 befindet sich eine Rastnase 12, welche eine Anschlagfläche 12a aufweist; an der Unterseite ist ein verdrehsicherungselement in Form eines achsparallel sich erstreckenden Vorsprunges 13 vorgesehen. Das relativ kurze Halsteil 8 weist beidseitig sich in Achsrichtung erstreckende Vorsprünge 14 auf, die in montiertem Zustand, also bei in das Griffteil 5 eingeschobenem Kopfteil 6, die später noch näher erläuterte Rasteinrichtung abdecken bzw. fixieren und mit denen eine weitere Verdrehsicherung gegenüber dem Griffteil erreicht wird.

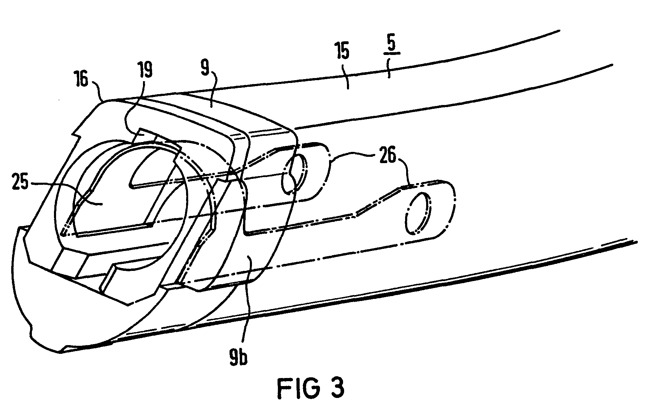

Die Figur 3 zeigt den vorderen Teil des Griffteils 5 bei abgenommenem Kopfteil 6. Das Griffteil 5 besteht aus einer Außenhülse 15 und einer in ihr befestigten Führungshülse 16 zur Aufnahme des Schaftes 10 des Kopfteils 6.

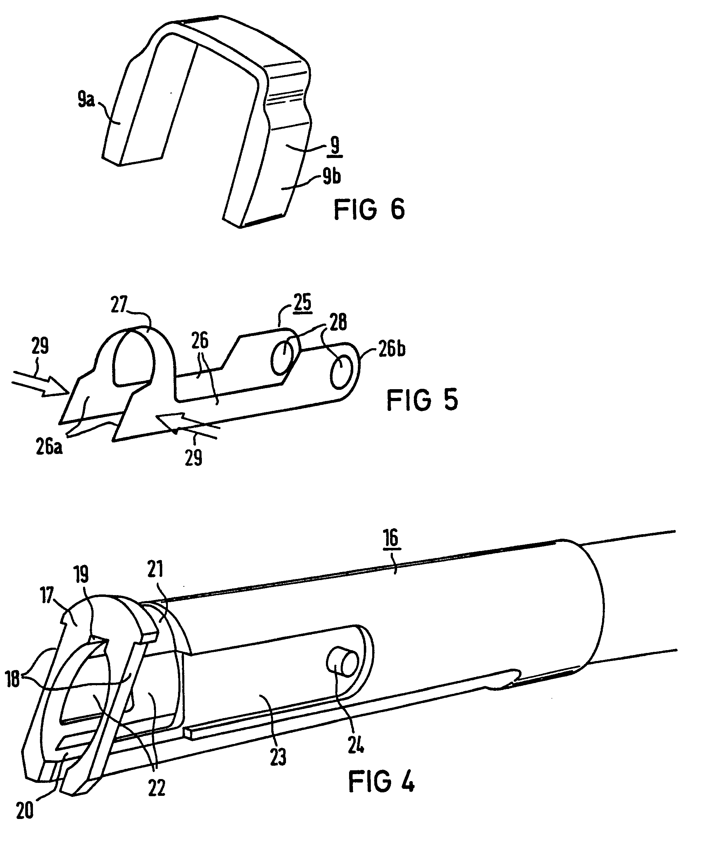

Die Figur 4 zeigt Einzelheiten der Führungshülse 16. Die im wesentlichen zylindrische Führungshülse 16 weist dem Kopfteil 6 zugewandt eine schräge Stirnfläche 17 mit beidseitigen Ausführungen 18 auf, in die im montierten Zustand die beidseitig angeordneten Vorsprünge 14 (Figur 2) eingreifen. Eine an der Oberseite der Hülsenöffnung vorgesehene Nut 19 erlaubt beim Einführen des Kopfteiles 6 ein ungehindertes Hindurchführen der auf der Schaftoberseite des Kopfteils befindlichen Rastnase 12. Ein diametral gegenüberliegender Längsschlitz 20 stellt das Gegenglied zu dem Verdrehsicherungselement 13 dar. Die Führungshülse 16 enthält einerseits eine etwa über den halben Schaftumfang sich erstreckende Ausdrehung 21, die in beidseitig vorgesehene Durchbrechungen 22 übergeht und andererseits ebenfalls an beiden Seiten des Schaftes angeordnete, achsparallel verlaufende Ausnehmungen 23 mit Befestigungsbolzen 24 zur Aufnahme und Halterung des in Figur 5 gezeigten Rastgliedes 25.

Das Rastglied 25 wird gebildet durch zwei etwa achsparallel sich erstreckende streifenförmige Abschnitte 26, die an ihren einen Enden 26a mittels eines Bügels 27 miteinander verbunden sind und an ihren anderen Enden (26b) Aufnahmebohrungen 28 für die Bolzen 24 aufweisen. Das Rastglied 25 besteht aus Federmaterial, ist also federelastisch und bildet im Bereich der Übergangsstelle vom Bügel 27 zu den Abschnitten Druckflächen, deren Lage durch die Pfeile 29 bezeichnet sind. Das Rastglied 25 wird über die Ausdehnung 21 der Hülse 16 geschoben, wobei die beiden seitlichen federnden Abschnitte 26 mittels der Bohrungen 28 in den Bolzen 24 der Ausnehmungen 23 fixiert werden. In montiertem Zustand liegen die durch die Pfeile 29 in Figur 5 bezeichneten Druckflächen im Bereich der Durchbrechungen 22. Nach Einlegen des Rastgliedes 25 wird von oben auf die Führungshülse 16 schließlich das in Figur 1 mit der Position 9 bezeichnete, in Figur 6 nochmals in perspektivischer Darstellung als Einzelteil dargestellte Betätigungsglied 9 aufgeschoben. Dieses etwa U-förmig gestaltete Teil ist ebenfalls federelastisch ausgebildet und besteht vorzugsweise aus Kunststoff. Mittels der beiden Schenkel 9a, 9b, die beidseitig aus der Mantelfläche des Handstückes leicht vorstehende Betätigungstasten bilden, läßt sich bei radialem Zusammendrücken (mit Daumen und Zeigefinger einer das Handstück 1 umfassenden Hand) das Rastglied 25 im Bereich der Druckfläche (Pfeile 29) verformen, wodurch der ursprünglich halbkreisförmige Bügel 27 so weit (oval) verformt wird, daß beim axialen Herausziehen des Kopfteils 6 die Rastnase unter dem im gerasteten Zustand die Rastnase 12 (Figur 2) hintergreifenden und an der Anschlagfläche 12a anliegenden Bügel 27 hindurchgleiten kann.

In Betrachtung der Figuren 1 und 3, die die Rasteinrichtung im montierten Zustand zeigen, ist verständlich, daß nur dann, wenn an beiden Schenkeln 9a, 9b des Betätigungsgliedes 9 gedrückt wird, der Bügel 27 des Federgliedes 25 so weit verformt wird, daß die Rastnase 12 unter dem Bügel hindurchgleiten und damit eine Entrastung der beiden Handstückteile 5, 6 erreicht werden kann.

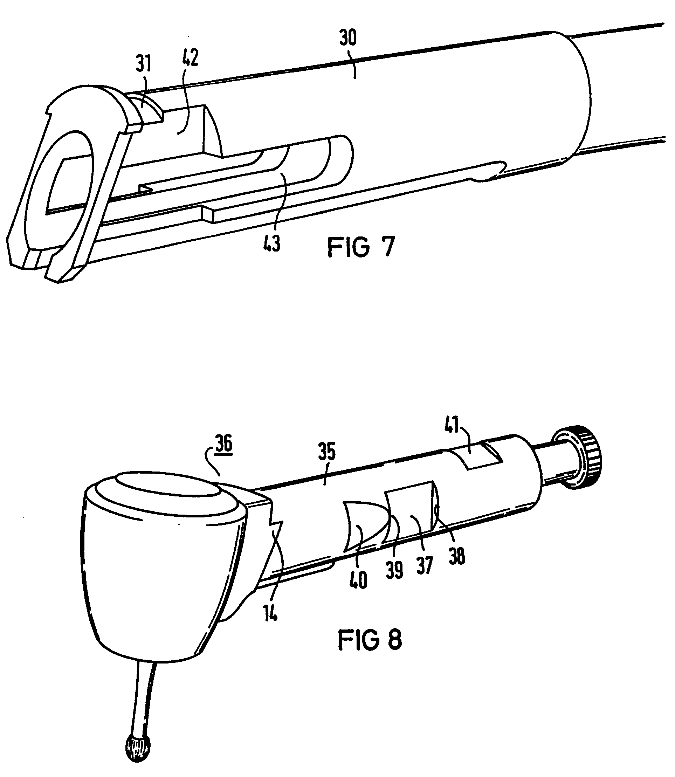

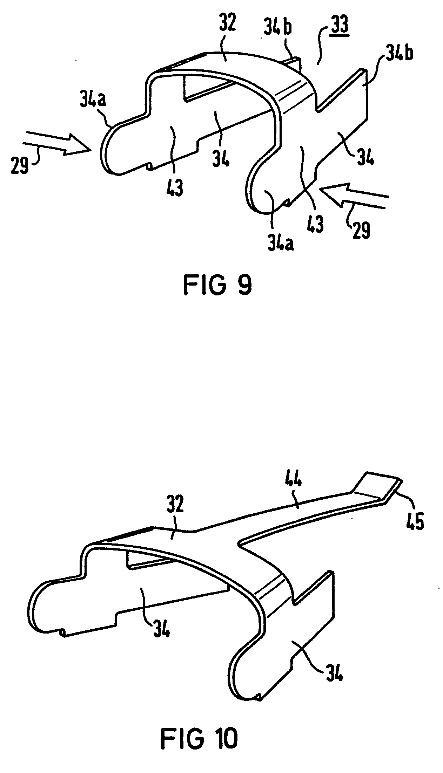

Die nachfolgenden Figuren zeigen weitere, ebenfalls vorteilhafte Ausführungsformen einer Rasteinrichtung. Die Figur 7 zeigt eine Führungshülse 30, die zur Aufnahme eines in Figur 9 näher dargestellten Rastgliedes 33 und eines in Figur 8 dargestellten Kopfteils 36 ausgebildet ist. Die Führungshülse 30 enthält an der Oberseite eine Ausdrehung 31, in die der Bügel 32 des in Figur 9 schaubildlich dargestellten Rastgliedes 33 eingelegt wird. Der Bügel 32 des Rastgliedes 33 ist wiederum mit seitlichen federnden Abschnitten 34 verbunden, deren eine Enden 34a eine Druckfläche zum Auslösen der Rastung und deren andere Enden 34b die Eingriffsmittel für die Rastung bilden.

Der Schaft 35 des in Figur 8 dargestellten Kopfteils 36 enthält beidseitig erste Ausnehmungen 37, die eine stirnseitige Anschlagfläche 38 bilden und von einer Kippkante 39 ausgehend zweite Ausnehmungen 40 und an der Oberseite eine einzige dritte Ausnehmung 41.

Zur Montage des federnden Rastgliedes 33 wird dieses von oben her mit dem Bügel 32 in die Ausdrehung 31 der Führungshülse 30 eingelegt. In dieser Position ist durch beidseitig in der Führungshülse 30 angeordnete, und ineinander übergehende Durchbrechungen 42, 43 gewährleistet, daß die Enden 34a, 34b der längs sich erstreckenden federnden Abschnitte 34 durch die Hülse hindurchgreifen können. Das Rastglied ist, wie aus Figur 9 hervorgeht, so geformt, daß die beiden federnden Abschnitte 34 mit ihren Enden 34b konvergierend verlaufen. Wird das Kopfteil 36 axial in die Führungshülse eingeführt, kommen die stirnseitigen Enden 34b der federnden Abschnitte 34 an den beiden Anlageflächen 38 der Ausnehmungen 37 zur Anlage. In dieser Position ist das Kopfteil 36 gegen axiales Abgleiten gesichert. Bei Andrücken an das Betätigungsglied 9, das auch bei dieser Ausführung wie in Figur 6 ausgebildet und entsprechend Figur 3 befestigt ist, wird über die beiden Betätigungstasten 9a, 9b ein radialer Druck auf die beiden Enden 34a der Abschnitte 34 ausgeübt. Die federnden Abschnitte 34 kommen dabei an der in Figur 9 mit 43 bezeichneten Stelle an der in Figur 8 mit 39 bezeichneten Kippkante des Kopfteils 35 zur Anlage. Bei weiterem Andruck können die einen Enden 34a in die Ausnehmungen 40 ausweichen und die anderen Enden 34b aus den Ausnehmungen 37 ausrücken, wodurch die Rastung hierbei außer Eingriff kommt.

Um eine zusätzliche Sicherheit gegen unbeabsichtigtes Herausgleiten des Kopfteils 36 auch bei versehentlichem Betätigen des Betätigungsgliedes 9 zu erreichen, kann gemäß einer in Figur dargestellten vorteilhaften Ausführungsform der Bügel 32 mit einem federnden Fortsatz 44 versehen sein, der mit seinem freien Ende 45 in die dritte Ausnehmung 41 des Kopfteils 36 eingreift, und zwar vorteilhafterweise erst bei Erreichen eines bestimmten axialen Hubes. Das Fortsatzende 45 kommt also erst dann in Eingriff, wenn nach Lösen der eigentlichen Rastung das Kopfteil einen geringfügigen, beispielsweise im Bereich von 1 bis 2 mm liegenden, axialen Hub in Entnahmerichtung ausgeführt hat.

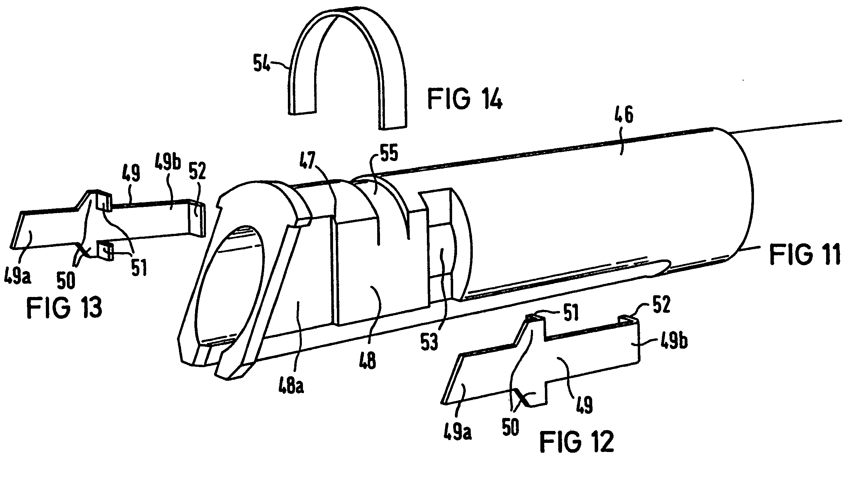

Die Figuren 11 bis 14 zeigen eine dritte Ausführungsform einer vorteilhaften Rasteinrichtung; bei dieser enthält eine Führungshülse 46 beidseitig durch jeweils eine lotrechte Anschlagkante 47 abgestufte plane Abflachungen 48, 48a, gegen die im montierten Zustand streifenförmige federnde Elemente 49 (Figuren 12/13) anliegen. Die federnden Elemente 49 weisen seitliche Ansätze 50 mit radial nach innen gerichteten ersten Vorsprüngen 51 auf, welche im montierten Zustand an der Anschlagkante

47 anliegen und die federnden Elemente 49 gegen Verschieben in Achsrichtung sichern. Auch bei dieser Ausführungsform bilden die einen Enden 49a der federnden Elemente 49 die Druckflächen zur Betätigung der Rastung und die anderen Enden 49b mit ebenfalls radial nach innen gerichteten zweiten Vorsprüngen 52 die Eingriffsmittel, welche im gerasteten Zustand an den Anschlagflächen 38 der Ausnehmungen 37 des Kopfteils 36 (sh. Figur 8) anliegen. Um ein Hindurchgreifen der Eingriffsmittel durch die Führungshülse 46 zu ermöglichen, sind beidseitig der Hülse 46 entsprechende Durchbrechungen 53 (Schlitze) vorgesehen.

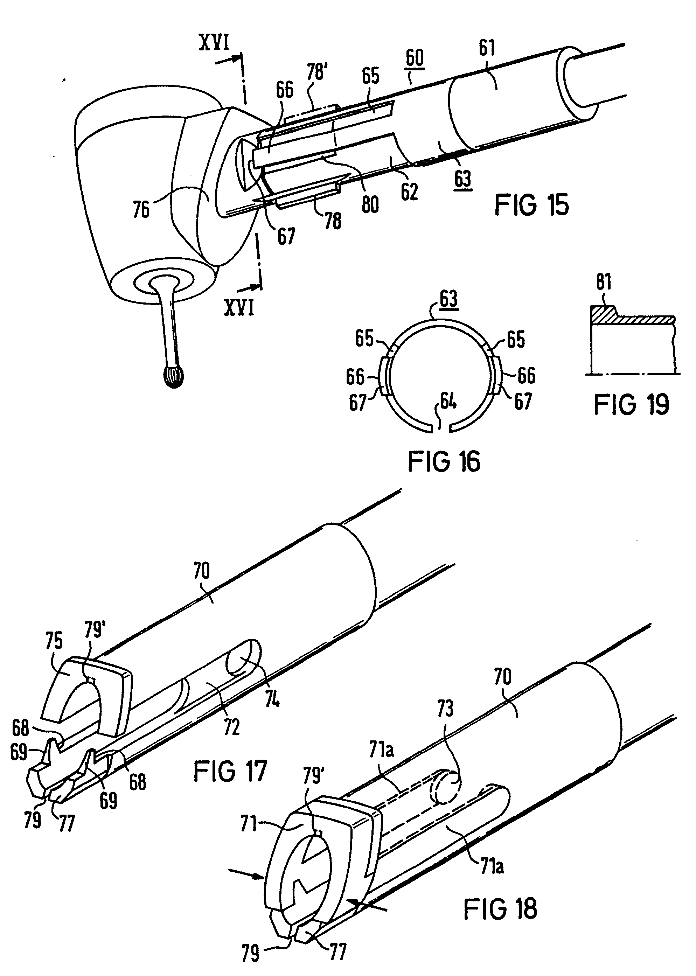

Im montierten Zustand werden die beiden federnden Elemente 49 mittels einer in Figur 14 dargestellten bügelförmigen Feder 54, die in einer entsprechenden Ausdrehung 55 eingelegt wird, gehalten. Anstelle der mehrteiligen Ausbildung der Rastelemente ist es auch denkbar, die beiden federnden Elemente 49 und den Bügel 54 einteilig auszubilden.

Die Figur 15 zeigt eine Ausführungsform eines Kopfteils 60, bei dem der Schaft 61 eine Eindrehung 62 aufweist, in die eine das Rastglied bildende Hülse 63 eingelegt ist. Die Hülse 63, in Figur 16 in Frontansicht gezeigt, enthält einerseits einen durchgehenden Längsschlitz 64, der es gestattet, die Hülse zur Montage leicht aufgeweitet über das Schaftende zu schieben und gegebenenfalls gegen Verdrehen zu sichern, andererseits mehrere nur über einen Teil der Hülsenlänge verlaufende Schlitze 65, die beidseitig der Hülse federnde Lappen 66 bilden. Die stirnseitigen Enden 67 dieser federnden Lappen 66 liegen im gerasteten Zustand an Anlageflächen 68 zweier Rasthaken 69 an, die in einem dem Schaftdurchmesser entsprechenden Abstand an einer an der Griffhülse 5 (Figur 1) befestigbaren Führungshülse 70 angeordnet sind. Die Führungshülse 70 ist abgesehen von der Rastung und Anordnung des Betätigungsgliedes ähnlich aufgebaut wie in Figuren 4 und 7. Das in Figur 18 gezeigte Betätigungsglied 71 ist im Prinzip ähnlich aufgebaut wie das in Figur 6 gezeigte Betätigungselement 9; es hat jedoch zusätzlich beidseitig Haltearme 71a, die in längs verlaufenden Nuten 72 der Führungshülse eingelegt und durch eine aus Zapfen 73 und Senkbohrung 74 bestehende Rastung gegen Herausfallen gesichert sind. Im Gegensatz zu den zuvor beschriebenen Ausführungen liegt das Betätigungselement 71 an einer schrägen Stirnfläche 75 der Führungshülse 70 direkt an. Im gerasteten Zustand liegt also das Betätigungselement 71 zwischen der schrägen Fläche 76 des Kopfteils 60 (Figur 15) und der schrägen Fläche 75 der Führungshülse 70. Den axialen Anschlag der beiden Handstückteile bildet jedoch eine mit 77 bezeichnete Fläche an der Führungshülse 70, die im gerasteten Zustand am unteren Teil der Strinfläche 76 des Kopfteils 60 zur Anlage kommt.

Wie bereits bei den zuvor beschriebenen Ausführungen ist zur Verdrehsicherung am Kopfteil 60 eine achsparallel verlaufende Rastnase 78 vorhanden, die beim Aufschieben des Kopfteils auf das Griffteil in einen Führungsschlitz 79 der Führungshülse 70 eingreift. Besonders vorteilhaft ist es, Rastnase und Führungsschlitz nicht an der Unterseite, sondern an der Oberseite des Kopfteils anzuordnen, wie dies in den Figuren 15, 17, 18 mit den Positionen 78', 79' angedeutet ist. Beim Aufschieben des Griffteils (mit Führungshülse) auf das Kopfteil läßt sich so eine genaue Positionierung, d.h. ein funktionsgerechtes Ausrichten der miteinander zu verbindenden Teile, erzielen. Werden Kopfteil und Griffteil gegeneinander verdreht, also nicht funktionsgerecht zueinander ausgerichtet aufgesetzt, so gleitet die schräge Stirnfläche des Betätigungselements 71 unter Anlage an der Rastnase 78' dort so weit entlang, bis die Rastnase in den Schlitz 79' einrastet.

Die erwähnte Verdrehsicherung der federnden Hülse 63 kann durch einen zusätzlichen, am Kopfteilschaft 61 vorgesehenen, in den durchgehenden Schlitz 64 eingreifenden Verdrehsicherungsstift oder durch die vorhandene Rastnase 78 bzw. 78' erfolgen.

Die beiden federnden Lappen 66 sind im nicht gerasteten Zustand (Figur 15) an ihren freien Enden leicht nach außen hin über den Durchmesser des Schaftes 61 hinausragend ausgespreizt. Beim Aufschieben der Führungshülse 70 gleiten die beiden Rasthaken 69 entlang der Außenfläche der Lappen 66 und drücken diese nach innen, bis deren Enden schließlich die Rasthaken 69 rastend hintergreifen. Zum Entrasten wird das Betätigungselement 71 an der durch die Pfeile (Figur 18) angegebenen Stelle leicht nach innen gedrückt; die federnden Lappen 66 werden dabei in einen hierfür am Schaft 61 vorgesehenen Freiraum 80 gedrückt, so daß sich das Kopfteil 60 von der Griffhülse 5 bzw. von der Führungshülse 70 axial abziehen läßt.

Alternativ zu der in den Figuren 15 und 16 gezeigten Ausführungsform der Rasthülse 63, die dort einen gleichbleibenden Querschnitt aufweist, kann die Rasthülse, wie in Figur 19 im Längsschnitt gezeigt, auch so ausgebildet sein, daß die federnden Lappen in der nicht gerasteten Stellung nicht nach außen abgespreizt sind, vielmehr an ihren Enden mit schrägen Anlaufflächen versehene Rastnasen 81 aufweisen.

Auch bei dieser Ausführungsform kann eine zusätzliche Sicherung gegen axiales Abgleiten des Kopfteils bei nicht eingerasteten Teilen vorgesehen sein. Eine solche zusätzliche Rastsicherung kann z.B. aus einer an der Führungshülse befestigten Blattfeder bestehen, deren freies Ende mit einer Rastnase versehen ist, die in eine Kerbe am Schaft eingreift. Eine solche zusätzliche Sicherung ist — wie bereits erwähnt — zweckmäßigerweise so angeordnet, daß sie erst dann zur Wirkung kommt, wenn die beiden Handstückteile (Kopfteil und Griffteil) einen geringen axialen Weg im Sinne eines Abgleitens ausgeführt haben.

**Patentansprüche**

1. Rastvorrichtung zum lösbaren Verbinden eines ein Kopfgehäuse (7) mit Halsteil (8) enthaltenden Kopfteiles (6, 36, 60) mit dem Griffteil (5) eines zahnärztlichen Handstückes (1), enthaltend einen Schaft (10, 35, 61) mit einem Verdrehsicherungselement (13, 78) im einen und einer Führungshülse (16, 30, 46, 70) für den Schaft (10, 35, 61) mit Gegenglied (20, 79) für das Verdrehsicherungselement (13, 78) im anderen der miteinander zu verbindenden Teile (6, 36, 60; 5), enthaltend ferner wenigstens ein Rastglied (25, 33, 49, 63) mit radial wirkenden Eingriffsmitteln (27, 34b, 49b, 66) in einem und wenigstens eine Anlagefläche (12a, 38, 68) für die Eingriffsmittel bei einer Rastung aufweisenden Gegeneingriffsmitteln (12, 37, 69) in einem anderen der miteinander zu verbindenden Teile, enthaltend ferner ein Betätigungsglied (9, 71) für die Eingriffsmittel, welches bei Ausübung eines Druckes die Rastverbindung außer Eingriff bringt, dadurch gekennzeichnet, daß zumindest das Betätigungsglied (9, 71) benachbart dem Kopfgehäuse (7) am kopfteilseitigen Endbereich des Griffteils (5) des Handstückes (1) angeordnet ist.

2. Rastvorrichtung nach Anspruch 1, dadurch gekennzeichnet, daß auch das Rastglied (25, 33, 49) mit den radial wirkenden Eingriffsmitteln (27, 34b, 49b) am Griffteil (5) des Handstückes angeordnet ist.

3. Rastvorrichtung nach Anspruch 1 oder 2, dadurch gekennzeichnet, daß das Rastglied (25, 33, 49, 63) aus einem oder mehreren, vorzugsweise zwei, im wesentlichen achsparallel sich erstreckenden Elementen (26, 34, 49, 66) gebildet ist, wobei die einen stirnseitigen Enden (34b, 67) der Elemente (34, 49, 66) oder die einen stirnseitigen Anlageflächen eines die Elemente (26) verbindenden Bügels (27) an den Anlageflächen (38, 68) der Gegeneingriffsmittel (37, 69) im gerasteten Zustand anliegen.

4. Rastvorrichtung nach Anspruch 3, dadurch gekennzeichnet, daß die Elemente (66) am Schaft (61) des Kopfteils (60) so angeordnet sind, daß im nicht gerasteten Zustand ihre dem Kopfgehäuse zugewandten Enden leicht nach außen über den Schaftdurchmesser hinaus vorstehen, daß an einer den Schaft (61) übergreifenden und das Betätigungsglied (71) aufnehmenden Hülse (70) die die Anlageflächen (68) enthaltenden Gegeneingriffsmittel, vorzugsweise in Form von zwei aufrecht in einem dem Schaftdurchmesser entsprechenden Abstand zu einander angeordneten Rasthaken (69), vorgesehen sind, und daß im Bereich der Rastung der Schaftdurchmesser einen durch Ausnehmungen im Schaft (61) des Kopfteils gebildeten Freiraum (80) aufweist, in den die freien Enden der Elemente (66) bei durch das Betätigungsglied (71) erfolgter, radial nach innen gerichteter Kraft ausweichen können.

5. Rastvorrichtung nach Anspruch 3 oder 4, dadurch gekennzeichnet, daß das Rastglied aus einer längsgeschlitzten Hülse (63) besteht, die durch über nur einen Teil der Hülsenlänge vorgesehene weitere Schlitze (65) die Eingriffsmittel darstellende federnde Lappen (66) bildet.

6. Rastvorrichtung nach einem der Ansprüche 1 bis 5, dadurch gekennzeichnet, daß Teile für die Rastung und die Teile für die Betätigung der Rastung von einer im Griffteil (5) drehfest gehaltenen Führungshülse (16, 30, 46, 70) aufgenommen werden.

7. Rastvorrichtung nach Anspruch 3, dadurch gekennzeichnet, daß das Rastglied (25, 33, 49) aus zwei im wesentlichen achsparallel sich erstreckenden und von einem über etwa den halben Schaftumfang angeordneten Bügel (27, 32, 54) gehaltenen Federelementen (26, 34, 49) gebildet ist, deren eine Enden (26a, 34a, 49a) eine Druckfläche (Pfeil 29) für das Betätigungsglied (9) bilden.

8. Rastvorrichtung nach Anspruch 7, dadurch gekennzeichnet, daß der Bügel (27) federelastisch ausgebildet ist und selbst die Eingriffsmittel bildet und im gerasteten Zustand eine die Anschlagfläche (12a) enthaltene Rastnase (12) am Schaft (10) des Kopfteils (6) hintergreift.

9. Rastvorrichtung nach Anspruch 8, dadurch gekennzeichnet, daß im Bereich der Druckfläche (Pfeil 29) der federnden Elemente (26) Durchbrechungen (22) in der Führungshülse (16) vorgesehen sind und die federnden Elemente (26) mit ihren anderen Enden (26b) in einer Ausnehmung (23) der Führungshülse (16) geführt und befestigt sind.

10. Rastvorrichtung nach Anspruch 9, dadurch gekennzeichnet, daß zur Befestigung der federnden Elemente (26) an der Führungshülse (16) Zapfen (24) oder dergleichen vorgesehen sind, in die die den Druckflächen (Pfeile 29) abgewandten und mit entsprechenden Ausnehmungen (28) versehenen Enden (26b) der federnden Elemente (26) eingehängt sind.

11. Rastvorrichtung nach Anspruch 7, dadurch gekennzeichnet, daß die beiden federnden Elemente (34) mit ihren den Druckflächen (Pfeile 29) abgewandten Enden (34b) die Eingriffsmittel bilden für am Schaft (35) des Kopfteils (36) angeordnete Anschlagflächen (38) aufweisende Gegeneingriffsmittel (37).

12. Rastvorrichtung nach Anspruch 11, dadurch gekennzeichnet, daß die federnden Elemente (34) mit ihren die Eingriffsmittel bildenden Enden (34b) konvergierend angeordnet sind.

13. Rastvorrichtung nach Anspruch 11, dadurch gekennzeichnet, daß am Schaft (35) des Kopfteils (36) beidseitig erste Anschlagflächen (38) für die Eingriffsmittel (34b) bildende Ausnehmungen (37) vorhanden sind, daß im Bereich der Druckflächen (Pfeile 29) am Schaft (35) zweite Ausnehmungen (40) vorhanden sind und daß dazwischen jeweils eine Kippkante (39) gebildet wird, um die die federnden Elemente (34) bei Ausübung eines Druckes auf die Druckflächen in «Außer-Eingriffsposition» gekippt werden.

14. Rastvorrichtung nach einem der Ansprüche 7 bis 9, dadurch gekennzeichnet, daß der die beiden federnden Elemente (34) haltende Bügel (32) einen sich in Achsrichtung erstreckenden federnden Fortsatz (44) mit einer Rastnase (45) am freien Ende aufweist, der in eine dritte Ausnehmung (41) am Schaft (35) des Kopfteils (36) einrastet.

15. Rastvorrichtung nach Anspruch 14, dadurch gekennzeichnet, daß die Lage der dritten Ausnehmung (41) zur Rastnase (45) so gewählt ist, daß die Rastung erst nach einem bestimmten axialen Hub in Entnahmerichtung des Kopfteils (36) in Eingriff kommt.

16. Rastvorrichtung nach einem der Ansprüche 7 bis 15, dadurch gekennzeichnet, daß der Bügel (27, 32) in eine etwa über den halben Umfang der Führungshülse (16, 30) vorgesehene Ausdrehung (21, 31) eingelegt ist, die in Durchbrechungen (22, 42, 43) für den Durchtritt zumindest der einen Enden (26b, 34b) der federnden Elemente (26, 34) übergehen.

17. Rastvorrichtung nach Anspruch 7, dadurch gekennzeichnet, daß zwei federnde Elemente (49) vorgesehen sind, die seitliche Ansätze (50) mit ersten, radial nach innen gerichteten Vorsprüngen (51) aufweisen, die an einer lotrechten Anschlagfläche (47) der Führungshülse (46) zur Anlage kommen und dadurch einerseits ein Kipplager und andererseits eine Fixierung der Elemente (49) gegen Verschiebung in axialer Richtung bilden, und daß an den den Druckflächen abgewandten Enden (49b) zweite, radial nach innen gerichtete Vorsprünge (52) vorhanden sind, welche die Eingriffsmittel bilden.

18. Rastvorrichtung nach Anspruch 17, dadurch gekennzeichnet, daß die beiden federnden Elemente (49) mittels eines in einer Ausnehmung (55) der Führungshülse (46) eingelegten Bügels (54) gehalten und dabei gegen Planflächen (48, 48a) der Führungshülse (46) gedrückt werden.

19. Rastvorrichtung nach einem der Ansprüche 1 bis 18, dadurch gekennzeichnet, daß als Betätigungsglied ein auf das Griffteil (5) bzw. die Führungshülse (16, 30, 70) klammerartig aufsetzbares, bügelförmiges federndes Teil (9, 71) vorgesehen ist, welches an den Schenkeln beidseitig Betätigungstasten (9a, 9b) enthält.

20. Rastvorrichtung nach Anspruch 19, dadurch gekennzeichnet, daß die Querverbindung des bügelförmigen Betätigungsteils (9) in einer am Umfang der Führungshülse (16, 30) vorgesehenen Ausnehmung (21, 31) so einlegbar ist, daß im eingelegten Zustand nur die beiden Betätigungstasten (9a, 9b) aus der Handstückoberfläche vorstehen.

21. Rastvorrichtung nach Anspruch 19, dadurch gekennzeichnet, daß das Betätigungsglied (9, 71) aus Kunststoff besteht.

22. Rastvorrichtung nach Anspruch 19, dadurch gekennzeichnet, daß das Betätigungsglied (71) beidseitig angeformte Halteteile (71a) enthält, die in Ausnehmungen (72) der Führungshülse (70) eingelegt und gegen axiales Abgleiten gesichert sind.

23. Rastvorrichtung nach einem der Ansprüche 1 bis 22, dadurch gekennzeichnet, daß Griffteil (5) bzw. Führungshülse (16, 30, 46) und Kopfteil (6, 36) miteinander korrespondierende Flächen (17, 71, 75) aufweisen, die schräg zum Kopfgehäuse (7) hin geneigt und im wesentlichen bis zu dessen unterem Ende sich erstreckend angeordnet sind.

**Claims**

1. Coupling for a detachable connection between a head member (6, 36, 60) comprising a head casing (7) with a neck member (8), and a handle (5) of a dental handpiece (1), the coupling comprising a shank (10, 35, 61) with a rotation-preventing element (13, 78) in one of the parts (6, 36, 60, 5) that are to be connected together, and with a guiding sleeve (16, 30, 46, 70) for the shank (10, 35, 61) with a mating element (20, 79) for the rotation-preventing element (13, 78) in the other, and further comprising at least one coupling member (25, 33, 49, 63) with radially operating catch means (27, 34b, 49b, 66) in one of the parts that are to be connected together, and at least one contact surface (12a, 38, 68) in another of the parts for the opposite catch means (12, 37, 69) which provided catch means when coupled, and further comprising an actuating member (9, 71) for the catch means, said actuating member disengaging the coupling upon exertion of pressure, characterised in that at least the actuating member (9, 71) is disposed adjacent to the head casing (7) on the extreme area, nearest the head, of the handle (5) of the handpiece (1).

2. Coupling according to claim 1, characterised in that the coupling member (25, 33, 49) with the radially operating catch means (27, 34b, 49b) is also disposed on the handle (5) of the handpiece.

3. Coupling according to claim 1 or 2, characterised in that the coupling member (25, 33, 49, 63) is constituted by one or more, preferably two, elements (26, 34, 49, 66) which extend substantially parallel to the axis, certain frontal ends (34b, 67) of the elements (34, 49, 66) or certain frontal contact surfaces of a stirrup (27) connecting the elements (26) bearing against the contact surfaces (38, 68) of the opposite catch means (37, 69) in the coupled state.

4. Coupling according to claim 3, characterised in that the elements (66) are so disposed on the shank (61) of the head member (60) that in the uncoupled state their ends nearest the head casing project slightly outwards past the diameter of the shank, in that the opposite catch means containing the contact surfaces (68) are provided on a sleeve (70) which fits over the shank (61) and receives the actuating member (71), said opposite catch means preferably being in the form of two coupling hooks (69) disposed upright at a distance from one another corresponding to the diameter of the shank, and in that near to where coupling takes place the diameter of the shank presents a clearance (80), formed by recesses in the shank (61) of the head member, into which the free ends of the elements (66) are able to escape when the actuating member (71) exerts a radially inwardly directed force.

5. Coupling according to claim 3 or 4, characterised in that the coupling member consists of a lengthwise slotted sleeve (63), which by way of additional slots (65) provided along only part of the length of the sleeve forms resilient tabs (66) constituting the catch means.

6. Coupling according to one of claims 1 to 5, characterised in that parts of the coupling and the parts for actuating the coupling are accommodated in a guiding sleeve (16, 30, 46, 70) held locked against rotation in the handle (5).

7. Coupling according to claim 3, characterised in that the coupling member (25, 33, 49) is constituted by two spring elements (26, 34, 49) which extend substantially parallel to the axis and are held by a stirrup (27, 32, 54) disposed over roughly half the circumference of the shank, one respective end (26a, 34a, 49a) of said spring elements forming a pressure face (arrow 29) for the actuating member (9).

8. Coupling according to claim 7, characterised in that the stirrup (27) is springily resilient and itself constitutes the catch means, and in the coupled state engages a coupling lug (12) which contains the contact surface (12a), on the shank (10) of the head member (6).

9. Coupling according to claim 8, characterised in that openings (22) are provided in the guiding sleeve (16) in the region of the pressure face (arrow 29) of the resilient elements (26) and the other ends (26b) of the resilient elements (26) are guided and fastened in a recess (23) of the guiding sleeve (16).

10. Coupling according to claim 9, characterised in that to fasten the resilient elements (26) there are provided on the guiding sleeve (16) pegs (24) or the like, into which the ends (26b) of the resilient elements (26) remote from the pressure faces (arrows 29) and provided with corresponding recesses (28) latch.

11. Coupling according to claim 7, characterised in that the two resilient elements (34) form by their ends (34b) remote from the pressure faces (arrows 29) the catch means for opposite catch means (37) disposed on the shank (35) of the head member (36) and incorporating stop faces (38).

12. Coupling according to claim 11, characterised in that the resilient elements (34) are disposed with their ends (34b) forming the catch means converging.

13. Coupling according to claim 11, characterised in that on the shank (35) of the head member (36) there are provided on both sides recesses (37) forming first stop faces (38) for the catch means (34b), in that in the region of the pressure faces (arrows 29) second recesses (40) are provided on the shank (35), and in that therebetween is formed a respective tilting edge (39), about which the resilient elements (34) are tilted into the «out-of engagement position» when pressure is exerted on the pressure faces.

14. Coupling according to one of claims 7 to 9, characterised in that the stirrup (32) holding the two resilient elements (34) has a continuation piece (44) which extends in the axial direction and has a coupling lug (45) at its free end, and which latches in a third recess (41) on the shank (35) of the head member (36).

15. Coupling according to claim 14, characterised in that the position of the third recess (41) to the coupling lug (45) is chosen so that the coupling is only engaged after a given axial stroke in the direction in which the head member (36) is removed.

16. Coupling according to one of claims 7 to 15, characterised in that the stirrup (27, 32) is set in a turned recess (21, 31), provided roughly over half the circumference of the guiding sleeve (16, 30), which merges into openings (22, 42, 43) for the passage of at least one respective end (26b, 34b) of the resilient elements (26, 34).

17. Coupling according to claim 7, characterised in that two resilient elements (49) are provided which have lateral heels (50) with first, radially inwardly directed projections (51) which come to rest against a perpendicular stop face (47) of the guiding sleeve (46) and thereby constitute, on the one hand, a tilting bearing, and, on the other hand, means of locking the elements (49) against displacement in the axial direction, and that on the ends (49b) remote from the pressure faces there are provided two radially inwardly directed projections (52) which constitute the catch means.

18. Coupling according to claim 17, characterised in that the two resilient elements (49) are held by means of a stirrup (54) set in a recess (55) of the guiding sleeve (46) are pressed against plane faces (48, 48a) of the guiding sleeve (46).

19. Coupling according to one of claims 1 to 18, characterised in that as the actuating member there is provided a stirrup-type resilient member (9, 71) adapted to be placed onto the handle (5) or guiding sleeve (16, 30, 70) in the manner of a clip, said resilient member containing actuating keys (9a, 9b) on the legs on both sides.

20. Coupling according to claim 19, characterised in that the transverse connection of the stirrup-type actuating member (9) is adapted to be set in a recess (21, 31) provided on the circumference of the guiding sleeve (16, 30), such that when set therein only the two actuating keys (9a, 9b) project from the surface of the handpiece.

21. Coupling according to claim 19, characterised in that the actuating member (9, 71) is made of plastic.

22. Coupling according to claim 19, characterised in that the actuating member (71) contains retaining members (71a) moulded onto both sides, which are set in recesses (72) of the guiding sleeve (70) are secured against slipping axially.

23. Coupling according to one of claims 1 to 22, characterised in that the handle (5), or more precisely the guiding sleeve (16, 30, 46), and the head member (6, 36) have surfaces (17, 71, 75) which correspond with one another and are obliquely inclined towards the head casing (7) and extend substantially as far as the bottom end thereof.

**Revendications**

1. Dispositif d'encliquetage pour établir une liaison détachable entre une tête (6, 36, 60), comprenant une enveloppe (7) et un col (8), et la poignée (5) d'une pièce à main (1) dentaire, dispositif qui comprend une tige (10, 35, 61) avec un élément de blocage en rotation (13, 78) dans l'une et un fourreau de guidage (16, 30, 46, 70) pour la tige (10, 35, 61) avec un élément antagoniste (20, 79) pour l'élément de blocage en rotation (13, 78) dans l'autre des parties (6, 36, 60; 5) à relier, le dispositif comprenant, en outre, au moins un organe d'encliquetage (25, 33, 49, 63) avec des moyens de crabotage (27, 34b, 49b, 66) agissant radialement dans une et des moyens de crabotage antagonistes (12, 37, 69), présentant au moins une face d'appui (12a, 38, 68) pour les moyens de crabotage, lors d'un encliquetage, dans une autre des parties à relier ensemble, de même qu'un organe de manœuvre (9, 71) pour les moyens de crabotage, organe qui, à l'application d'une pression, rompt la liaison à encliquetage, caractérisé en ce que l'organe de manœuvre (9, 71), au moins, est disposé près de l'enveloppe (7) de la tête sur la région terminale côté tête de la poignée (5) de la pièce à main (1).

2. Dispositif selon la revendication 1, caractérisé en ce que l'organe d'encliquetage (25, 33, 49), portant les moyens de crabotage (27, 34b, 49b) agissant radialement, est disposé également sur la poignée (5) de la pièce à main.

3. Dispositif selon la revendication 1 ou 2, caractérisé en ce que l'organe d'encliquetage (25, 33, 49, 63) est constitué d'un ou de plusieurs, de préférence de deux éléments (26, 34, 49, 66) s'étendant à peu près parallèlement à l'axe, les faces d'extrémité (34b, 67) d'un côté des éléments (34, 49, 66) ou les faces d'appui à une estrémité d'un étrier (27) reliant les éléments (26), à l'état encliqueté, s'appliquent contre les faces d'appui (38, 68) des moyens de crabotage antagonistes (37, 69).

4. Dispositif selon la revendication 3, caractérisé en ce que les éléments (66) sont disposés sur la tige (61) de la tête (60) de manière que, à l'état non encliqueté, leurs extrémités dirigées vers l'enveloppe de la tête dépassent légèrement vers l'extérieur au-delà du diamètre de la tige, que les moyens de crabotage antagonistes contenant les faces d'appui (68) et se présentant de préférence sous la forme de deux crochets d'arrêt (69) disposés verticalement à une distance l'un de l'autre qui correspond au diamètre de la tige, sont prévus sur un fourreau (70) qui s'emboîte sur la tige (161) et reçoit l'organe d'actionnement (71), et que, dans la région de l'encliquetage, le pourtour de la tige présente une zone de dégagement (80) formée par des évidements dans la tige (61) de la tête et dans laquelle peuvent s'échapper les extrémités libres des éléments (66) lorsque l'organe de manœuvre (71) exerce une force dirigée radialement vers l'intérieur.

5. Dispositif selon la revendication 3 ou 4, caractérisé en ce que l'organe d'encliquetage est formé par une douille (63) fendue longitudinalement et qui forme, par des fentes supplémentaires (65) prévues sur une partie seulement de la longueur de la douille, des pattes élastiques (66) représentant les moyens de crabotage.

6. Dispositif selon une des revendications 1 à 5, caractérisé en ce que des parties pour l'encliquetage et les parties pour la manœuvre de l'encliquetage sont reçues par un fourreau de guidage (16, 30, 46, 70) maintenu sans rotation possible dans le manche (5).

7. Dispositif selon la revendication 3, caractérisé en ce que l'organe d'encliquetage (25, 33, 49) est formé de deux éléments élastiques (26, 34, 49) s'étendant à peu près parallèlement à l'axe et maintenus par un étrier (27, 32, 54) s'étendant sur la moitié environ du pourtour de la tige, éléments dont les extrémités (26a, 34a, 49a) d'un côté forment une surface de pression (flèche 29) pour l'organe de manœuvre (9).

8. Dispositif selon la revendication 7, caractérisé en ce que l'étrier (27) a l'élasticité d'un ressort, forme lui-même les moyens de crabotage et s'accroche à l'état encliqueté derrière une saillie d'arrêt (12) prévue sur la tige (10) de la tête (6) et présentant la face de butée (12a).

9. Dispositif selon la revendication 8, caractérisé en ce que le fourreau (16) présente des alvéoles (22) dans la région de la surface de pression (flèche 29) des éléments élastiques (26) et les éléments élastiques (26) sont guidés et fixés par leurs autres extrémités (26b) dans un évidement (23) du fourreau (16).

10. Dispositif selon la revendication 9, caractérisé en ce que, pour la fixation des éléments élastiques (26) au fourreau (16), on à prévu des tenons (24) ou des moyens semblables, auxquels sont accrochées les extrémités (26b) des éléments élastiques (26) situées à l'opposé des surfaces de pression (flèches 29) et pourvues d'évidements (28) correspondants.

11. Dispositif selon la revendication 7, caractérisé en ce que les deux éléments élastiques (34) forment, par leurs extrémités (34b) situées à l'opposé des surfaces de pression (flèches 29), les moyens de crabotage destinés à coopérer avec les moyens de crabotage antagonistes (37) disposés sur la tige (35) de la tête (36) et présentant des faces de butée (38).

12. Dispositif selon la revendication 11, caractérisé en ce que les éléments élastiques (34) convergent par leurs extrémités (34b) formant les moyens de crabotage.

13. Dispositif selon la revendication 11, caractérisé en ce que la tige (35) de la tête (36) présente, sur les deux côtés, des évidements (37) formant des premières faces de butée (38) pour les moyens de crabotage (34b), que des deuxièmes évidements (40) sont situés sur la tige (35) dans la région des surfaces de pression (flèches 29) et que, sur chaque côté une arrête de basculement (39) est formée entre les évidements, arête sur laquelle les éléments élastiques (34) sont basculés à la «position de dégagement» lorsqu'une pression est exercée sur les surfaces de pression.

14. Dispositif selon une des revendications 7 à 9, caractérisé en ce que l'étrier (32), maintenant les deux éléments élastiques (34), présente un prolongement élastique (44) s'étendant en direction axiale et portant une saillie d'arrêt (45) à son extrémité libre, saillie qui s'encliquette dans un troisième évidement (41) sur la tige (35) de la tête (36).

15. Dispositif selon la revendication 14, caractérisé en ce que la position du troisième évidement (41) est choisie de telle manière, par rapport à la saillie d'arrêt (45), que l'encliquetage se produit seulement après un déplacement axial déterminé dans la direction d'enlèvement de la tête (36).

16. Dispositif selon une des revendications 7 à 15, caractérisé en ce que l'étrier (27, 32) est placé dans une gorge (21, 31) réalisée au tour et s'étendant à peu près sur la moitié du pourtour du fourreau (16, 30), gorge qui se raccorde à des alvéoles (22, 42, 43) pour le passage d'au moins les extrémités (26b, 34b) situées sur un côté des éléments élastiques (26, 34).

17. Dispositif selon la revendication 7, caractérisé en ce qu'il comprend deux éléments élastiques (49) qui présentent des appendices latéraux (50) avec des premières saillies (51) dirigées radialement vers l'intérieur, qui viennent s'appuyer contre une face de butée (47) verticale du fourreau (46) et forment ainsi, d'une part, un appui de basculement et, d'autre part, une fixation des éléments (49) pour empêcher leur déplacement en direction axiale, et que les extrémités (49b) situées à l'opposé des surfaces de pression, portent des deuxièmes saillies (52) dirigées radialement vers l'intérieur et constituant les moyens de crabotage.

18. Dispositif selon la revendication 17, caractérisé en ce que les deux éléments élastiques (49) sont maintenus au moyen d'un étrier (54) placé dans un évidement (55) du fourreau (46) et sont pressés contre des surfaces planes (48, 48a) du fourreau (46).

19. Dispositif selon une des revendications 1 à 18, caractérisé en ce que l'organe de manœuvre est une pièce élastique (9, 71) en forme d'étrier, pouvant être disposée à la façon d'une pince sur la poignée (5) ou sur le fourreau (16, 30, 70), pièce dont les branches forment des boutons de manœuvre (9a, 9b) sur les deux côtes.

20. Dispositif selon la revendication 19, caractérisé en ce que la liaison transversale de la pièce de manœuvre (9), en forme d'étrier, peut être placée dans un évidement (21, 31) prévu sur le pourtour du fourreau (16, 30), de manière qu'après sa mise en place, les boutons de manœuvre (9a, 9b) dépassent seuls de la surface de la pièce à main.

21. Dispositif selon la revendication 19, caractérisé en ce que l'organe de manœuvre (9, 71) est en matière plastique.

22. Dispositif selon la revendication 19, caractérisé en ce que l'organe de manœuvre (71) comporte des parties de maintien (71a) formées des deux côtés sur cet organe, parties qui sont disposées dans des logements (72) du fourreau (70) et sont empêchées de se détacher par glissement axial.

23. Dispositif selon une des revendications 1 à 22, caractérisé en ce que la poignée (25) ou le fourreau (16, 30, 46) et la tête (6, 36) présentent des surfaces (17, 71, 75) mutuellement correspondantes, qui sont inclinées obliquement par rapport à l'enveloppe (7) de la tête et s'étendent essentiellement jusqu'à l'extrémité inférieure de celle-ci.

FIG 1

FIG 2

EP 0 215 295 B1

FIG 3

13

9a

9
9b

FIG 6

27

29

25
28
26
26b

26a

29

FIG 5

16

19
21
17

18

23
24

22

20

FIG 4

FIG 7

FIG 8

FIG 9

FIG 10

FIG 11

FIG 12

FIG 13

FIG 14

XVI

78'

66    65    <u>60</u>    61

76

67    78    80    62    <u>63</u>

XVI

**FIG 15**

<u>63</u>

65    65

66    66

67    67

64

81

**FIG 16**

**FIG 19**

70

75    79'

68

69    72    74

79    77    69    68

**FIG 17**

79'

71    71a    73    70

71a

79    77

**FIG 18**